Europäisches Patentamt

(19) European Patent Office

Office européen des brevets

(11) **EP 0 948 229 A1**

(12) **EUROPEAN PATENT APPLICATION**

(43) Date of publication:
06.10.1999 Bulletin 1999/40

(51) Int. Cl.$^6$: **H04Q 7/36**, H01Q 3/26

(21) Application number: 98302652.7

(22) Date of filing: 03.04.1998

(84) Designated Contracting States:
AT BE CH CY DE DK ES FI FR GB GR IE IT LI LU
MC NL PT SE
Designated Extension States:
AL LT LV MK RO SI

(71) Applicant:
LUCENT TECHNOLOGIES INC.
Murray Hill, New Jersey 07974-0636 (US)

(72) Inventor: Speight, Timothy James
Clifton, Bristol, BS8 1AA (GB)

(74) Representative:
Funnell, Samantha Jane et al
Lucent Technologies UK Limited,
5 Mornington Road
Woodford Green, Essex IG8 0TU (GB)

(54) **Process for assigning channels in a cellular radio communication system**

(57) A process is disclosed for assigning channels for communications between base stations, each having an array of antennas, and mobile terminals in a cellular radio communication system. The process comprises:

determining the approximate positions of mobile stations relative to one or more antennas;
configuring the array of antennas at a first base station to produce a major lobe and nulls in its polar diagram, the lobe being directed at the approximate position of a first mobile terminal in the first cell;
assigning a data communication channel between the first base station and the first mobile terminal; and
reassigning that data channel for communications in a second cell between a second base station and a second mobile terminal at the approximate position of which the major lobe at the first base station is not directed.

The process provides better discrimination against interferers and/or allows channels to be reassigned in closer cells than is conventional.

FIG. 1

## Description

This invention relates to a process for assigning channels for communication between base stations and mobile terminals in a cellular radio communication system.

It is proposed to steer the antenna for downlink communication. The invention is based on the recognition that if an antenna is configured so as to direct a lobe for downlink communications at a mobile terminal, there is no improvement experienced by mobiles in interfering cells located in the direction of the lobe.

In accordance with the invention there is provided a process for assigning channels for communications between base stations, each having an array of antennas, and mobile terminals in a cellular radio communication system, the process comprising:

determining the approximate positions of mobile stations relative to one or more antennas;
configuring the array of antennas at a first base station to produce a major lobe and nulls in its polar diagram, the lobe being directed at the approximate position of a first mobile terminal in the first cell;
assigning a data communication channel between the first base station and the first mobile terminal; and
reassigning that data channel for communications in a second cell between a second base station and a second mobile terminal at the approximate position of which the major lobe at the first base station is not directed.

The process provides better discrimination against interferers and/or allows channels to be reassigned in closer cells than is conventional.

The polar diagram of the configured array will contain a plurality of minor lobes and the major lobe separated by nulls. Preferably, the channels are assigned to the second mobile terminal so that a null at the first base station is directed at the second mobile terminal.

The approximate directions of a mobile station may be found using uplink transmissions on a signalling channel.

One embodiment of the invention will now be described, by way of example, with reference to the accompanying drawings, in which:

Figure 1 is a schematic diagram of a multi element antenna array and a space processor as used for downlink communications;
Figure 2 is a schematic plan of a portion of a cellular radio communication network.
Figure 3 is a schematic diagram of the antenna array and a space processor as used on uplink communications; and
Figure 4 shows sets of cross correlation metrics $a_{xy}$

for a group of successive frames.

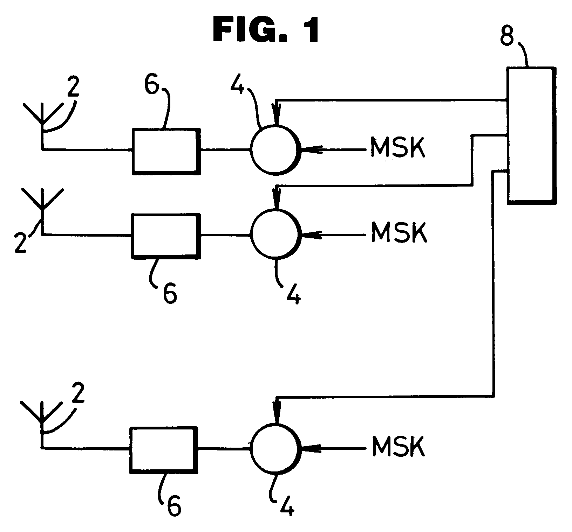

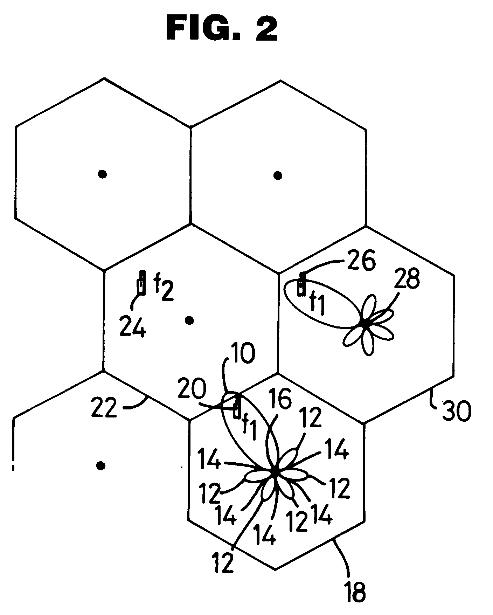

Referring to Figures 1 and 2 of the drawings a plurality of antennas 2 is arranged in an array. Identical modulated signals are provided to a set of phase shifters 4. Phase shifted outputs of the phase shifters are provided to respective wide band power amplifiers 6 and thence to respective antennas in the array.

A controller 8 provides phase control signals to the phase shifters 4 so that radiation from the antenna array has a polar diagram such as that shown in Figure 2. The polar diagram has a major lobe 10 and a plurality of minor lobes 12 separated by nulls 14. The phase shifts applied enable the major lobe to be steered.

The polar diagram shown in Figure 2 belongs to the antenna array, not shown in Figure 2, of a base station located at the polar centre 16. The base station serves a cell 18.

For downlink communication with a mobile terminal located at 20 in the cell 18, the base station determines from uplink communications in which direction the mobile terminal 20 is located. Using a downlink channel $f_1$, the phase shifters 4 are then controlled to direct the major lobe 10 at the mobile terminal thereby reducing the power needed.

In a direction aligned with the major lobe 10 and in an adjacent cell a mobile terminal 24 is at no advantage compared with conventional downlink transmission systems employing sector or omni-directional antennas and another channel $f_2$ is used. In other directions the interference in channel $f_1$ is reduced and the channel can be reassigned for down link communication with another mobile terminal 26 from a base station 28 even, as shown, in an adjacent cell 30.

The least interference is obtained at the mobile station 26 if the channel $f_1$ is reassigned in cell 30 in a direction located on a null of the polar diagram of the base station 16.

Ideally, the mobile station 20 would also be located on a null of the polar diagram of the base station 28. Thus to re-allocate channel $f_1$ the base station 28 needs information from interfering base station 16 as to the direction of a mobile station 26 from the base station 26 which can also be determined from uplink communications between the mobile station 26 and the base station 16. The mobile stations 20 and 26 may be distinguished by different training sequences.

If channel $f_1$ is available in cell 30 it would be advantageous to assign it before assigning other channels.

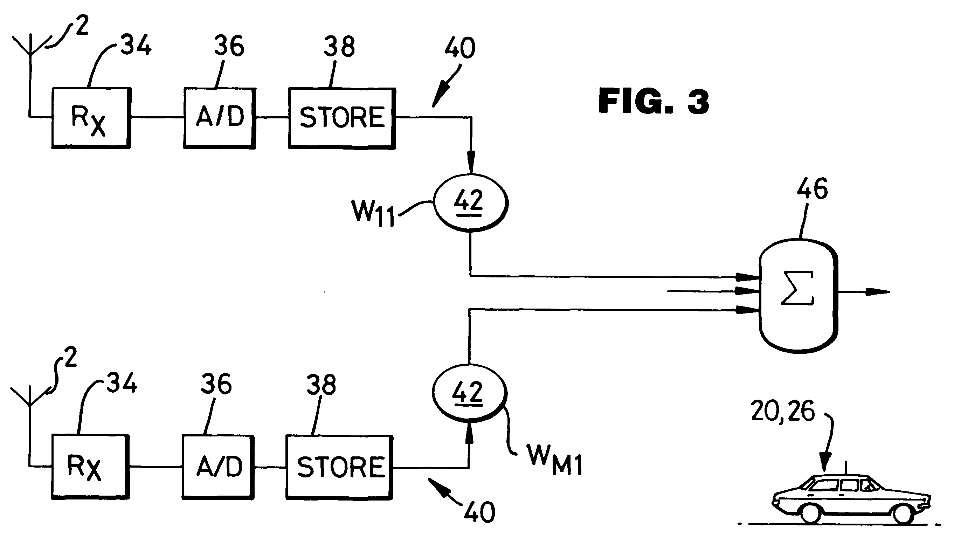

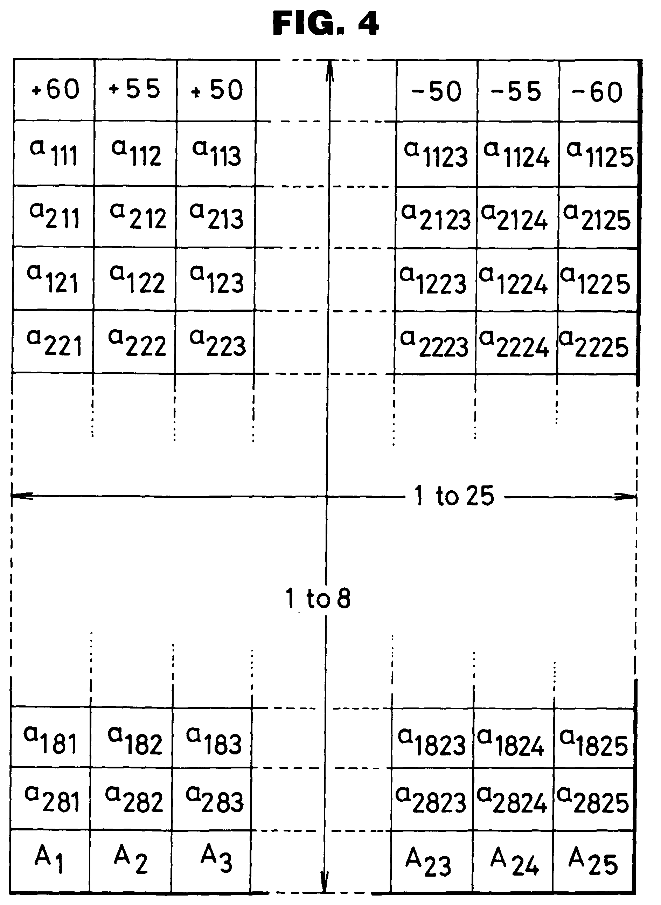

Referring to Figures 3 and 4 of the drawings, the array has M antennas 2 in one polarisation and M antennas in an orthogonal polarisation. Each of the M antennas in each polarisation is connected to a respective receiver 4. The signals received by the array are gaussian minimum shift key (GMSK) modulated. The received signals are de-rotated in the receivers 4 to remove differential phase encoding of the GMSK signals. The de-rotated signal from each receiver is fed to an analog to digital convertor 6 where it is sampled and quantised, and the quantised samples are converted to coded digital signals.

The digitised de-rotated signals are stored in a store 8 from which they can be read in sequence.

An iterative process is carried out for groups **i** of 8 successive frames to ascribe a direction $D_i$ to the mobile terminal.

Within each iteration, the stored digitised de-rotated signals are iteratively space processed to produce the effect of the array having a major lobe in its polar diagram at a plurality of different successive directions.

The space processing may be achieved by weighting the signals received by each antenna and summing the weighted signals. The space processor may be physical or simulated by one or more data processors. The processing is carried out faster than real time in either case so that all the different directions are processed in one frame.

Whether the space processor is physical or virtual, in each branch 40 the signal is weighted by individual complex weights 42. The weighted signals branch signals are summed in a summer 46. The weights are to have equal magnitude but differing phases so as to scan the major lobe through 120° from -60° to +60°.

In each frame of the signals transmitted by a mobile terminal 20,26 there is a mid-amble comprising a known training sequence of 26 symbols. There is a plurality of different training sequences and the mobile terminal is instructed by the base station which sequence to send. The training sequence is not re-used by mobile terminal which might interfere with the terminal 20,26 so that they can be distinguished.

In one example, there are 4 antennas in one polarization and 4 antennas in an orthogonal polarisation. In each direction and separately for each polarisation, a crosscorrelation is performed on the summed signal output from summer 46 and the known training sequence to derive an intermediate cross correlation metric. The crosscorrelation is performed for a group of 5 symbols 11 times iteratively, sliding the known training sequence by one symbol relative to the group of 5 signals read from the store between successive iterations. The highest value intermediate crosscorrelation metric is selected and a direction metric **a** is calculated for each direction

$$a_{pxy} = \frac{\text{maximum sliding correlator}}{\text{power of received signal}}$$

where p (1 to 2) represents the polarization, y (1 to 25) represents the direction and x (1 to 8) represents the set of metrics for that frame.

The power of the received signal may conveniently be calculated by taking the sum of the distance of the received signal from a set level of zero.

The direction metric is calculated for a group **i** of 8 successive frames. The metrics for one group of frames are shown in Figure 4. The metrics for each direction are summed over the 8 frames in the group.

The direction metrics for each direction are summed

$$A_y = \sum_{p=1\ x=1}^{p=2\ x=8} a_{pxy}$$

The direction $D_i$ having the highest value of summed direction metrics $A_y$ is chosen for the group **i**.

The process is repeated 13 times, **i** = 1 to 13, covering a total of 104 frames.

The average

$$D_{av} = \sum_{i=1}^{i=13} D_i/13$$

is calculated and the mobile terminal is ascribed the average direction $D_{av}$.

In calculating the average $D_{av}$, obviously wild values of $D_i$ may be discarded. Thus, for example, an intermediate average may be calculated, directions $D_i$ lying more than a predetermined distance from the average may be discarded and the average may be recalculated from the remaining values of $D_i$.

Since the mobile terminal is able to move around, the direction is recalculated every 104 frames. In order to provide further protection from wild results, the change from one ascribed direction to the next may be limited to a maximum value.

Having ascribed a direction to the mobile terminal, the antenna array can be steered to produce a major lobe in the polar diagram for downlink signals in the direction of the mobile terminal, thus reducing potential interference in other directions.

**Claims**

1. A process for assigning channels for communications between base stations, each having an array of antennas, and mobile terminals in a cellular radio communication system, the process comprising:

determining the approximate positions of mobile stations relative to one or more antennas;
configuring the array of antennas at a first base station to produce a major lobe and nulls in its polar diagram, the lobe being directed at the approximate position of a first mobile terminal in the first cell;

assigning a data communication channel between the first base station and the first mobile terminal; and

reassigning that data channel for communications in a second cell between a second base station and a second mobile terminal at the approximate position of which the major lobe at the first base station is not directed.

2. A method as claimed in claim 1, in which the a null at the first base station is directed at the second mobile terminal.

3. A method as claimed in claim 1 or claim 2, wherein the second cell is adjacent the first cell.

4. A method as claimed in any preceding claim, wherein the approximate direction of a mobile station is found using uplink transmissions on a signalling channel.

# FIG. 1

# FIG. 2

**FIG. 3**

EP 0 948 229 A1

# FIG. 4

| +60 | +55 | +50 | | | -50 | -55 | -60 |
|---|---|---|---|---|---|---|---|
| $a_{111}$ | $a_{112}$ | $a_{113}$ | | | $a_{1123}$ | $a_{1124}$ | $a_{1125}$ |
| $a_{211}$ | $a_{212}$ | $a_{213}$ | | | $a_{2123}$ | $a_{2124}$ | $a_{2125}$ |
| $a_{121}$ | $a_{122}$ | $a_{123}$ | | | $a_{1223}$ | $a_{1224}$ | $a_{1225}$ |
| $a_{221}$ | $a_{222}$ | $a_{223}$ | | | $a_{2223}$ | $a_{2224}$ | $a_{2225}$ |

1 to 25

1 to 8

| $a_{181}$ | $a_{182}$ | $a_{183}$ | | | $a_{1823}$ | $a_{1824}$ | $a_{1825}$ |
|---|---|---|---|---|---|---|---|
| $a_{281}$ | $a_{282}$ | $a_{283}$ | | | $a_{2823}$ | $a_{2824}$ | $a_{2825}$ |
| $A_1$ | $A_2$ | $A_3$ | | | $A_{23}$ | $A_{24}$ | $A_{25}$ |

**European Patent Office**

# EUROPEAN SEARCH REPORT

Application Number

EP 98 30 2652

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 197 37 136 A (MATSUSHITA ELECTRIC INDUSTRIAL CO., LTD.) 12 March 1998<br>* column 14, line 7 – column 15, line 58 *<br>* column 38, line 56 – column 40, line 10 * | 1-3 | H04Q7/36<br>H01Q3/26 |
| X | SWALES S C ET AL: "THE PERFORMANCE ENHANCEMENT OF MULTIBEAM ADAPTIVE BASE-STATION ANTENNAS FOR CELLULAR LAND MOBILE RADIO SYSTEMS"<br>IEEE TRANSACTIONS ON VEHICULAR TECHNOLOGY, vol. 39, no. 1, February 1990, pages 56-67, XP000128234 | 1,3 | |
| A | * page 57, left-hand column, line 31 – page 58, left-hand column, line 28 *<br>* page 65, left-hand column, line 9 – page 66, right-hand column, line 11 * | 2 | |
| A | GB 2 317 786 A (MOTOROLA LIMITED) 1 April 1998<br>* page 8, line 17 – page 9, line 21 * | 1,4 | |

TECHNICAL FIELDS SEARCHED (Int.Cl.6)

H01Q

The present search report has been drawn up for all claims

| Place of search | Date of completion of the search | Examiner |
|---|---|---|
| THE HAGUE | 4 September 1998 | Behringer, L.V. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)